# EUROPEAN PATENT APPLICATION

(11) **EP 4 269 236 A1**
(43) Date of publication of application: **01.11.2023**
(21) Application number: 22170750.8
(22) Date of filing: 29.04.2022
(51) Int. Cl.: B64C 25/06, B64C 25/10, B64C 25/62, B64C 25/60, B64C 25/32

(54) **A ROTARY WING AIRCRAFT WITH AN AT LEAST PARTIALLY NON-RETRACTABLE LANDING GEAR**

(71) Applicant: Airbus Urban Mobility GmbH, 80333 Munich (DE)
(72) Inventor: REICHENSPERGER, Christian, 86698 OBERNDORF AM LECH (DE); BLACHA, Martin, 86609 DONAUWÖRTH (DE); STEGER, Justus, 86709 WOLFERSTADT (DE)
(74) Representative: GPI Brevets

(57) **Abstract**

The invention is related to a rotary wing aircraft with a fuselage and an at least partially non-retractable landing gear, wherein the at least partially non-retractable landing gear comprises at least three individual support legs, wherein at least one individual support leg (30) of the at least three individual support legs is mounted pivotally to the fuselage by means of an associated pivot bearing arrangement (35), wherein the at least one individual support leg (30) is further connected to the fuselage via at least one torsion element (36) with a predetermined elastic range, and wherein the at least one torsion element (36) is adapted to act, in the predetermined elastic range, as a torsional spring, and, outside of the predetermined elastic range, as an energy absorber.

## Description

The present invention is related to a rotary wing aircraft with a fuselage and a landing gear.

Conventional landing gears of rotary wing aircrafts are either provided as retractable or partially retractable landing gears, or as fixed, i. e. non-retractable landing gears. Retractable or partially retractable landing gears are usually embodied as wheel-type landing gears, while fixed landing gears are usually embodied as skid-type landing gears.

Use of a wheel-type landing gear or a skid-type landing gear for a given rotary wing aircraft mostly depends on a respective size and weight of the given rotary wing aircraft. In other words, wheel-type landing gears are usually implemented with larger rotary wing aircrafts in order to allow for an improved ground handling of such larger rotary wing aircrafts, while light-to-medium rotary wing aircrafts are usually implemented with skid-type landing gears.

In general, respective landing gears of rotary wing aircrafts, in particular rotary wing aircrafts with vertical take-off and landing capabilities, are designed to allow absorption of vertical energy occurring during landing by means of elastic deformation during a regular or normal landing and plastic deformation during a hard or downward crash landing. The plastic deformation mainly contributes to energy dissipation of the vertical energy and shock absorption during such a hard or downward crash landing. For instance, such a plastic deformation during a hard or downward crash landing may reach values of up to 360 mm in vertical direction at the aft cross tube and of up to 460 mm at the forward cross tube in a helicopter-type rotary wing aircraft with a conventional skid-type landing gear having two skid tubes, a forward cross tube, and an aft cross tube. An illustrative skid-type landing gear with two skid tubes, a forward cross tube, and an aft cross tube is described in the document EP 2 610 170 A1.

Other landing gear designs that account for energy dissipation and shock absorption are also known. For instance, the document US 3,144,223 describes a helicopter-type rotary wing aircraft with a fuselage and a non-retractable skid-type landing gear that comprises a pair of co-operable substantially identical shock absorbing portions which are secured to associated structural members provided at respective sides of the fuselage. Each shock absorbing portion comprises a torsion rod structure with two operatively distinct rod sections which extend in opposite directions toward outer ends from an intermediate reference location at which the torsion rod structure is operatively and non-rotatably secured by means of a bracket to the respectively associated structural member. The outer ends of the two operatively distinct rod sections are positioned in and supported by bearing means in a manner free to rotatably twist. The bearing means are also in the form of bearing brackets, respectively, which are secured to the respectively associated structural members. Furthermore, the two operatively distinct rod sections are welded or otherwise non-rotatably and fixedly connected to respective socket members adjacent to the outer ends and the socket members are rigidly mounted to laterally extending strut members, e. g. by means of threaded bolts.

The document US 5,060,886, in turn, describes a non-retractable wheel-type landing gear for a vertical take-off and landing aircraft. The wheel-type landing gear includes a pair of spaced-apart fore and aft longitudinal tubes attached to a pair of short, spaced-apart cross tubes that are adapted to mount on structural saddles provided on an underside of the aircraft. The longitudinal tubes are connected together at the forward end for mounting a fully swiveling nose gear thereto. Aft main gear wheels are mounted on cantilever landing gear legs that extend laterally from the longitudinal tubes adjacent the aft cross tube. The cantilever landing gear legs are mounted by means of associated elastomeric bearings with cylindrical elastomeric springs to the longitudinal tubes. Landing loads on the wheel-type landing gear may be absorbed by resilient springs provided at the forward end, deflection of the gear legs and the aft cross tube, torsion of the fore and aft longitudinal tubes, or any combination of these actions. Resilient springs are used in the wheel-type landing gear to attenuate fatigue stresses in conjunction with the deflection of the longitudinal and cross tubes of the wheel-type landing gear.

The document US 3,128,971 describes a non-retractable wheel-type landing gear that is mounted to a tip of a wing of an aircraft. The wheel-type landing gear includes a wheel that is rotatably mounted to one end of a suspension arm. The other end of the suspension arm is rigidly mounted to a cross shaft which is, thus, fixedly secured against rotation to the suspension arm. Both ends of the cross shaft are rotatably received and supported in associated bearings, which are respectively fixedly secured to front and rear walls of a spar that is arranged in the wing. The cross shaft is further fixedly connected to one end of a rectilinear torsion element in the form of an elongated tubular member which is rigidly mounted at its other end to the wing such that the other end is fixed against rotary motion. The elongated tubular member, however, may be subjected to a twisting action by an angular movement of the suspension arm.

However, in all of the above-described non-retractable landing gears the respective torsion elements are not separated from transmission of bending and normal loads. In other words, there is no functional separation in an underlying load path, since normal forces become bending with torsion and vice versa. Therefore, in the above-described non-retractable landing gears respectively absorbable energies are comparatively low and the landing gears as such only provide for a limited stiffness.

It is, therefore, an object of the present invention to provide a new landing gear and, more particularly, a new rotary wing aircraft with a landing gear that overcomes the drawbacks of the above-described landing gears.

This object is solved by a rotary wing aircraft with a fuselage and an at least partially non-retractable landing gear that comprises the features of claim 1. More specifically, according to the present invention the at least partially non-retractable landing gear comprises at least three individual support legs, wherein at least one individual support leg of the at least three individual support legs is mounted pivotally to the fuselage by means of an associated pivot bearing arrangement, wherein the at least one individual support leg is further connected to the fuselage via at least one torsion element with a predetermined elastic range, and wherein the at least one torsion element is adapted to act, in the predetermined elastic range, as a torsional spring, and, outside of the predetermined elastic range, as an energy absorber.

Advantageously, the at least partially non-retractable landing gear of the rotary wing aircraft according to the present invention fulfills the "no single point of failure" criteria of the EASA SC VTOL regulation due to provision of internal redundancies. In fact, every load path may simply be designed to be easily redundant.

Moreover, the at least partially non-retractable landing gear of the rotary wing aircraft according to the present invention advantageously consists of several major components forming a landing gear assembly. These major components can be arranged in various manners, whereby the share of functions is identical for each variant. Preferably, these major components comprise for the at least one individual support leg at least a leg box that forms the individual support leg as such, as well as a pivot bearing arrangement and a torsion element which connect the leg box to the fuselage of a given rotary wing aircraft, wherein the fuselage forms an aircraft interface. Optionally, the major components may further comprise a fairing.

More specifically, the leg box is preferably provided to transfer during landing all loads from ground to the fuselage (global forces in X, Y and Z direction). During normal landings, the leg box preferentially works in an associated linear elastic range as its main function is to transfer loads and not to absorb energy. The leg box may be made of metal and/or composite material. By way of example, the leg box may be mounted pivotally by means of the pivot bearing arrangement in respective lateral quarter shells of the rotary wing aircraft with respect to an axis which is at least approximately in parallel to a longitudinal axis of the rotary wing aircraft (X-direction) or, in the case of a tricycle-type landing gear, with an axis perpendicular to the longitudinal axis of the rotary wing aircraft. An associated pivot axis of the leg box is preferably arranged such that in case of a hard landing or a downward crash the leg box rotates around this pivot axis.

Advantageously, the leg box may be optimized with respect to different individual design points. By way of example, the leg box may be weight-optimized or stiffness-optimized without impacting other items of the at least partially non-retractable landing gear.

Preferably, the leg box acts individually and is connected to an associated solid base that may e. g. form a ground contact device. This ground contact device is preferentially provided to transmit loads from ground to the leg box and may be realized by any conventionally available device, such as e. g. a skid, a wheel, a snow shoe or even, in case of water or amphibious aircrafts, a floating device. In particular, use of a wheel enables e. g. rolling take-off and landings and further enables multiple applications of use. Preferentially, at least three punctual (e. g. wheels, snow shoes, etc.) or at least two linear (e. g. skids, etc.) ground contact devices are provided.

The pivot bearing arrangement is preferably provided to transfer during landing all forces in the vertical direction (forces in Z direction) from the leg box to the fuselage. More specifically, the main function of the pivot bearing arrangement is preferably to transfer shear forces from the leg box to the fuselage of the rotary wing aircraft.

The torsion element is preferably embodied as a bi-linear absorber with an inherent nonlinear force characteristic. More specifically, the torsion element preferentially works in two different stages or ranges respectively: In a regular or normal landing the torsion element preferably merely acts to introduce loads from the leg box into the fuselage in an associated elastic regime. Thus, the torsion element prevents the leg box from rotating around the pivot axis and functions as a torsion spring. In other words, in a normal landing the torsion element preferably stores occurring landing energy in a manner that is similar to an elastic spring effect. In a hard landing or downward crash, when a respectively occurring landing energy exceeds a predefined energy threshold or downward speed threshold, such as e. g. 1m/s, the torsion element preferably dissipates respectively occurring kinetic energy by plasticization.

By way of example, the bi-linear absorber that forms the torsion element may be designed as one part as a simple torque loaded tube, i. e. as a torque tube made of a material with plasticization capabilities after exceeding yield strength in torsion or shear respectively, which implies that a material with a predetermined plasticization capability is used. This provides a possibility to tailor an underlying force deflection curve of the at least partially non-retractable landing gear almost as desired and to increase its absorbing capability up to crashworthiness.

However, in case the material used for the torque tube does not offer sufficient plasticization capability, a bolted connection that is adapted to dissipate energy by exceeding bearing strength may likewise be used. Alternatively, specific machine elements with a similar nonlinear force characteristic may also be used instead of a torque tube.

Advantageously, use of separate components for realizing the torsion element and the pivot bearing arrangement enables decoupling of the functions of energy absorption and load transfer such that the principles of lightweight construction may at least be applied to optimize design of the leg box. For instance, composite materials may be used or higher inertias due to increased support leg height. Furthermore, the torsion element as energy absorbing part may also be optimized as it has no load transfer duty. As a result, the at least partially non-retractable landing gear may be realized with a reduced overall weight.

Moreover, the use of separate components for realizing the torsion element and the pivot bearing arrangement enables a respective drag landing load transfer path from the energy absorption, hence, there is no negative impact on an underlying absorbing capability due to load superposition. This advantage mainly affects separation of a need for strength in longitudinal direction and a need for softness/compliance in vertical direction.

The fairing is preferably provided to embody the leg box with an aerodynamic shape in order to reduce aerodynamic drag. The fairing may be a separate component that is mounted to the leg box, or an integral part of the leg box. Preferentially, the fairing does not considerably contribute to stiffness and load carrying capacity of the leg box. However, as the fairing enables an overall design of the leg box which may at least approximate an airfoil, the overall aerodynamic drag of the at least partially non-retractable landing gear may be reduced significantly, and even more if it is designed without skids.

The aircraft interface is preferably provided to transmit forces from the leg box and respective moments from the torsion element to the fuselage. Accordingly, the aircraft interface must provide sufficient strength and stiffness in order to sustain all loads transferred via the leg box and the torsion element.

According to some aspects, the associated pivot bearing arrangement is provided to enable rotation of the at least one individual support leg about an associated rotation axis defined by the associated pivot bearing arrangement and to transfer shear forces from the at least one individual support leg to the fuselage, wherein the at least one torsion element is embodied with an inherent nonlinear force characteristic.

According to some aspects, the associated pivot bearing arrangement comprises at least one shear pin which is provided to transfer shear forces from the at least one individual support leg to the fuselage, wherein the at least one torsion element rigidly attaches the at least one individual support leg to the fuselage to limit at least in the predetermined elastic range of the at least one torsion element rotation of the at least one individual support leg about the rotation axis defined by the at least one shear pin.

According to some aspects, the at least one torsion element comprises at least one torque tube that rigidly attaches the at least one individual support leg to the fuselage to limit at least in the predetermined elastic range of the at least one torsion element rotation of the at least one individual support leg about the associated pivot bearing arrangement, wherein the at least one torque tube comprises in its length direction at least one of a circular cross section, an elliptic cross section, a polygonal cross section, a constant outer diameter, a varying outer diameter, a constant wall thickness, a varying wall thickness, one or more holes, one or more slots, one or more grooves, one or more rims, one or more weak points, or one or more steps.

According to some aspects, the at least one torque tube is provided in its length direction with end flanges, wherein each end flange comprises in the length direction of the at least one torque tube at least one of a circular cross section, an elliptic cross section, a polygonal cross section, a plurality of circular holes, a plurality of polygonal holes, or a plurality of slots.

According to some aspects, the at least one individual support leg comprises at least a first mounting flange and a second mounting flange, wherein the first mounting flange and the second mounting flange are pivotally mounted to the fuselage by means of the at least one shear pin.

According to some aspects, the at least one shear pin comprises a first shear pin for pivotally mounting the first mounting flange to the fuselage, and a second shear pin for pivotally mounting the second mounting flange to the fuselage.

According to some aspects, the first shear pin and the second shear pin are rigidly mounted to the fuselage.

According to some aspects, the at least one torque tube is rigidly mounted to the first mounting flange and to the fuselage.

According to some aspects, the at least one torsion element comprises an additional torque tube that rigidly attaches the at least one individual support leg to the fuselage to limit at least in the predetermined elastic range of the at least one torsion element rotation of the at least one individual support leg about the associated rotation axis defined by the at least one shear pin, wherein the additional torque tube is rigidly mounted to the second mounting flange and to the fuselage.

According to some aspects, the at least one individual support leg comprises a third mounting flange that is arranged along the associated rotation axis of the at least one individual support leg between the first mounting flange and the second mounting flange, wherein the at least one torque tube is rigidly mounted to the third mounting flange and to the fuselage close to the first mounting flange.

According to some aspects, the at least one torsion element comprises an additional torque tube that rigidly attaches the at least one individual support leg to the fuselage to limit at least in the predetermined elastic range of the at least one torsion element rotation of the at least one individual support leg about the associated rotation axis defined by the at least one shear pin, wherein the additional torque tube is rigidly mounted to the third mounting flange and to the fuselage close to the second mounting flange.

According to some aspects, the at least one shear pin connects the first mounting flange to the second mounting flange.

According to some aspects, the additional torque tube comprises in its length direction at least one of a circular cross section, an elliptic cross section, a polygonal cross section, a constant outer diameter, a varying outer diameter, a constant wall thickness, a varying wall thickness, one or more holes, one or more grooves, one or more rims, one or more weak points, or one or more steps.

According to some aspects, the additional torque tube is provided in its length direction with end flanges, wherein each end flange comprises in the length direction of the additional torque tube at least one of a circular cross section, an elliptic cross section, a polygonal cross section, a plurality of circular holes, a plurality of polygonal holes, or a plurality of slots.

It should be noted that the various different aspects of the present invention which are described above should not be understood as separate, isolated embodiments. Instead, any feasible combinations of the different aspects are likewise contemplated.

By way of example, in an illustrative realization of the inventive rotary wing aircraft with a fuselage and an at least partially non-retractable landing gear, the at least partially non-retractable landing gear may comprise at least three individual support legs, wherein each individual support leg is mounted pivotally to the fuselage by means of at least one shear pin which is provided to transfer shear forces from the individual support leg to the fuselage, wherein each individual support leg is further connected to the fuselage via at least one torque tube with a predetermined elastic range, the at least one torque tube being provided to transfer bending moments from the individual support leg to the fuselage, and wherein the at least one torque tube is adapted to act, in the predetermined elastic range, as a torsional spring, and, outside of the predetermined elastic range, as an energy absorber.

Illustrative embodiments of the invention are outlined by way of example in the following description with reference to the attached drawings. In these attached drawings, identical or identically functioning components and elements are labeled with identical reference numbers and characters and are, consequently, only described once in the following description.
- Figure 1 shows a perspective view of a rotary wing aircraft with a fuselage and an at least partially non-retractable landing gear according to the present invention,
- Figure 2A to Figure 2C show perspective views of the rotary wing aircraft with the fuselage and the at least partially non-retractable landing gear of Figure 1, with different ground contact devices,
- Figure 3 shows a perspective view of an individual support leg of the at least partially non-retractable landing gear of Figure 1 to Figure 2C according to a first embodiment,
- Figure 4 shows a cut view of the rotary wing aircraft of Figure 1 to Figure 2C with the individual support leg of Figure 3,
- Figure 5 shows a cut view of the fuselage of the rotary wing aircraft of Figure 1 to Figure 2C with the individual support leg of Figure 3, with two torque tubes, seen along a cut line V-V in Figure 3 and Figure 4,
- Figure 6A to Figure 6G show perspective views of illustrative variants of the torque tube(s) of Figure 5,
- Figure 7 shows a perspective view of an individual support leg of the at least partially non-retractable landing gear of Figure 1 to Figure 2C according to a second embodiment,
- Figure 8 shows a cut view of the rotary wing aircraft of Figure 1 to Figure 2C with the individual support leg of Figure 7,
- Figure 9 shows a cut view of the fuselage of the rotary wing aircraft of Figure 1 to Figure 2C with the individual support leg of Figure 7, seen along a cut line IX-IX in Figure 7 and Figure 8,
- Figure 10 shows a perspective view of an individual support leg of the at least partially non-retractable landing gear of Figure 1 to Figure 2C according to a third embodiment,
- Figure 11 shows a cut view of the rotary wing aircraft of Figure 1 to Figure 2C with the individual support leg of Figure 10,
- Figure 12 shows a cut view of the fuselage of the rotary wing aircraft of Figure 1 to Figure 2C with the individual support leg of Figure 10, seen along a cut line XII-XII in Figure 10 and Figure 11,
- Figure 13 shows a force deflection diagram with force deflection curves, and
- Figure 14 shows a deformation mechanics diagram.

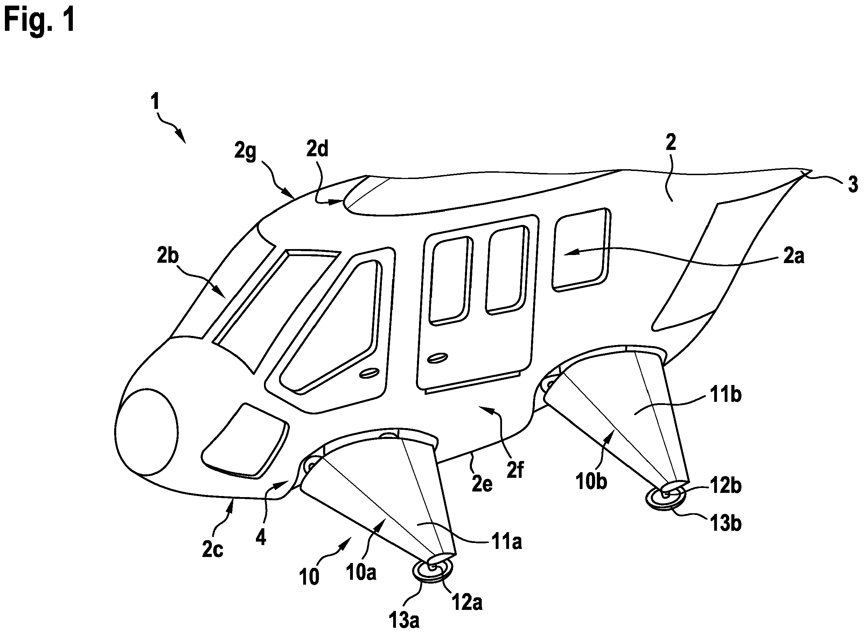

Figure 1 shows an aircraft 1 that is by way of example illustrated as a rotary wing aircraft, in particular as a Vertical Take-Off and Landing aircraft, and, more particularly, as a helicopter. Thus, for purposes of simplicity and clarity, the aircraft 1 is hereinafter referred to as the "helicopter 1".

Illustratively, the helicopter 1 comprises a fuselage 2 that forms, by way of example, a cabin 2a and a cockpit 2b. The fuselage 2 is connected to a tail boom 3 and comprises a lower fuselage region 2c, as well as an upper fuselage region 2d. Furthermore, the fuselage 2 is provided with an underside shell 2e, a portside shell 2f, and a starboard side shell 2g. Moreover, lateral quarter shells 4 are preferably provided in an area of the portside shell 2f and the starboard side shell 2g which is close to the underside shell 2e.

According to one aspect, the helicopter 1 comprises a landing gear 10. At this point it should be noted that only a part of the helicopter 1 with the fuselage 2 and the landing gear 10 is shown to illustrate the landing gear 10 and connection of the landing gear 10 to the fuselage 2 in more detail, while illustration of other well-known components is omitted, for simplicity and clarity of the drawing. For instance, neither the tail boom 3 is illustrated in greater detail for showing e. g. a suitable counter-torque device, nor a main rotor is shown, and so on.

Preferably, the landing gear 10 is at least partially non-retractable and, by way of example, the landing gear 10 is non-retractable. According to the present invention, the landing gear 10 comprises at least three individual support legs, wherein at least one individual support leg of the at least three individual support legs is mounted pivotally to the fuselage 2, as described in more detail below.

By way of example, and not for restricting the present invention accordingly, the landing gear 10 comprises four individual support legs, from which only two individual support legs are visible in Figure 1 and labelled with the reference signs 10a, 10b. The individual support legs 10a, 10b are preferably separately mounted pivotally to the fuselage 2 at the lateral quarter shells 4.

Illustratively, the individual support leg 10a comprises a leg box 11a that may be aerodynamically shaped. The leg box 11a may be connected via a support rod 12a to a solid base 13a that forms a ground contact device. By way of example, the solid base 13a is formed as a base plate or pad. Similarly, the individual support leg 10b comprises a leg box 11b that may also be aerodynamically shaped and that may be connected via a support rod 12b to a solid base 13b that forms a ground contact device. By way of example, the solid base 13b is also formed as a base plate or pad.

It should be noted that the individual support legs 10a, 10b are illustratively configured identically, at least within predetermined manufacturing tolerances. However, they may also distinguish from each other and be arranged differently on the fuselage 2. For instance, instead of providing the helicopter 1 with four individual support legs as illustrated, only three individual support legs may be provided. In this case, two of the three individual support legs may be mounted similar to what is shown in Figure 1 either in a front or in an aft region of the helicopter 1, while the third individual support leg is respectively mounted in the aft or the front region and oriented perpendicular to the two other individual support legs, and so on.

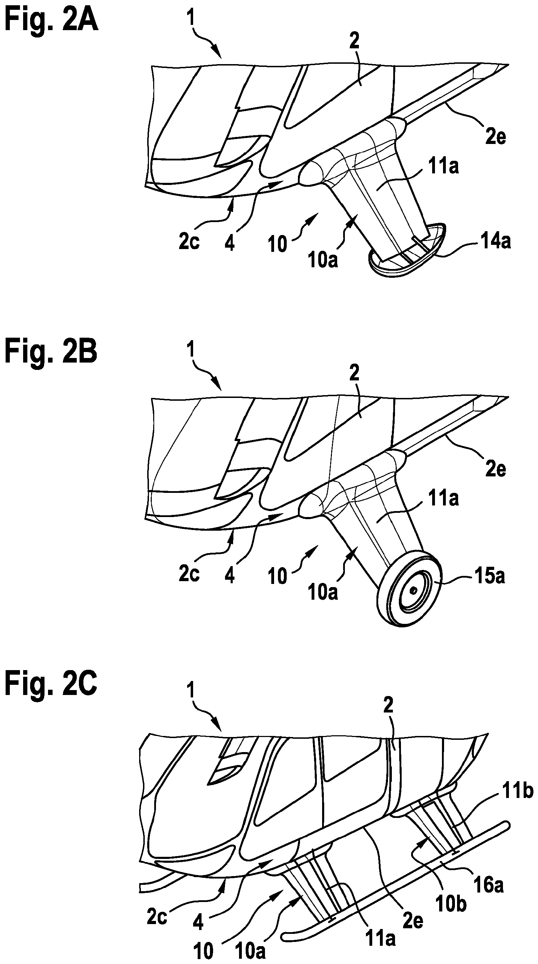

Figure 2A shows a cut-out of the helicopter 1 with the fuselage 2 and the landing gear 10 of Figure 1. The fuselage 2 has the lower fuselage region 2c with the underside shell 2e and the lateral quarter shell 4, to which the individual support leg 10a with the leg box 11a of the landing gear 10 is mounted pivotally. However, by way of example the leg box 11a is now connected to a snow shoe 14a.

Figure 2B shows a cut-out of the helicopter 1 with the fuselage 2 and the landing gear 10 of Figure 1. The fuselage 2 has the lower fuselage region 2c with the underside shell 2e and the lateral quarter shell 4, to which the individual support leg 10a with the leg box 11a of the landing gear 10 is mounted pivotally. However, by way of example the leg box 11a now rotatably supports a wheel 15a.

Figure 2C shows a cut-out of the helicopter 1 with the fuselage 2 and the landing gear 10 of Figure 1. The fuselage 2 has the lower fuselage region 2c with the underside shell 2e and the lateral quarter shell 4, to which the individual support legs 10a, 10b with the leg boxes 11a, 11b of the landing gear 10 are respectively mounted pivotally. However, by way of example the leg boxes 11a, 11b are now illustratively connected to a common skid 16a.

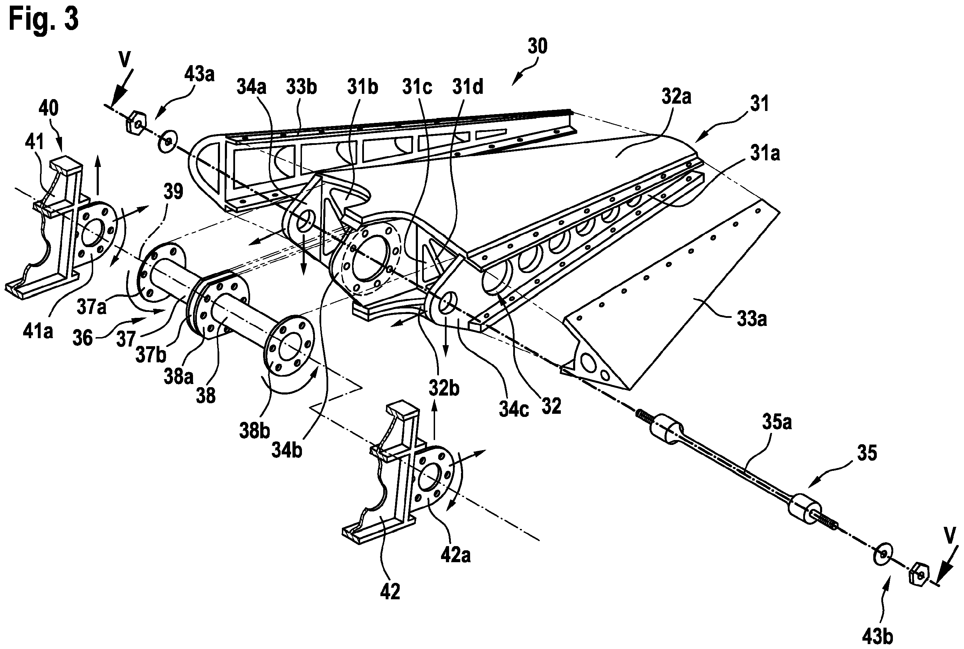

Figure 3 shows an illustrative support leg 30 that may be mounted pivotally to associated fuselage frames 40. For instance, the support leg 30 may be used to realize one or more of the individual support legs 10a, 10b of Figure 1. In this case, the fuselage frames 40 are preferably an integral part of the fuselage 2 of Figure 1.

Illustratively, the fuselage frames 40 include two separate individual webs 41, 42 which are respectively provided with an associated mounting plate 41a, 42a. The mounting plates 41a, 42a are preferably adapted to support the support leg 30, as described hereinafter.

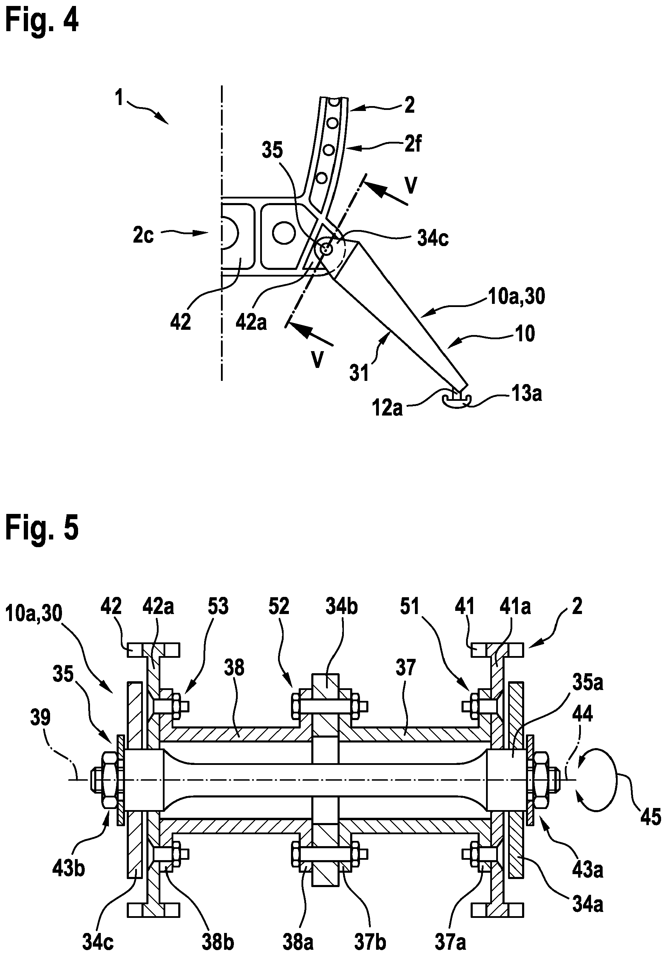

The support leg 30 is preferably adapted for being mounted pivotally to the fuselage, i. e. the fuselage frames 40, by means of an associated pivot bearing arrangement 35. The pivot bearing arrangement 35 is illustratively provided to enable rotation of the support leg 30 about an associated rotation axis (44 in Figure 5) defined by the pivot bearing arrangement 35 and to transfer shear forces from the support leg 30 to the fuselage, i. e. the fuselage frames 40. By way of example, the pivot bearing arrangement 35 comprises at least one shear pin 35a which is provided to transfer shear forces from the support leg 30 to the fuselage, i. e. the fuselage frames 40.

The individual support leg 30 is preferably further adapted for being connected to the fuselage, i. e. the fuselage frames 40, via at least one torsion element 36 with a predetermined elastic range, wherein the at least one torsion element 36 is adapted to act, in the predetermined elastic range, as a torsional spring, and, outside of the predetermined elastic range, as an energy absorber. The at least one torsion element 36 is preferentially embodied with an inherent nonlinear force characteristic. Preferably, the at least one torsion element 36 rigidly attaches the support leg 30 to the fuselage, i. e. the fuselage frames 40, to limit at least in the predetermined elastic range of the at least one torsion element 36 rotation of the support leg 30 about the rotation axis (44 in Figure 5) defined by the pivot bearing arrangement 35. More specifically, the at least one torsion element 36 may comprise at least one torque tube 37 that rigidly attaches the support leg 30 to the fuselage, i. e. the fuselage frames 40, to limit at least in the predetermined elastic range of the at least one torsion element 36 rotation of the support leg 30 about the pivot bearing arrangement 35.

By way of example, the pivot bearing arrangement 35 comprises a single shear pin 35a and the at least one torsion element 36 is formed by two torque tubes 37, 38, which may be made of different materials. Each one of the torque tubes 37, 38 is preferably provided in its length direction, which is illustrated for both torque tubes 37, 38 with a dashed line 39, with associated end flanges 37a, 37b, 38a, 38b. Each end flange 37a, 37b, 38a, 38b may comprise in the length direction 39 at least one of a circular cross section, an elliptic cross section, a polygonal cross section, a plurality of circular holes, a plurality of polygonal holes, or a plurality of slots, etc. Furthermore, each one of the torque tubes 37, 38 may be formed in its length direction 39 with at least one of a circular cross section, an elliptic cross section, a polygonal cross section, a constant outer diameter, a varying outer diameter, a constant wall thickness, a varying wall thickness, one or more holes, one or more slots, one or more grooves, one or more rims, one or more weak points, or one or more steps.

Preferably, the shear pin 35a is adapted for pivotally mounting a first mounting flange or lug 34a that is rigidly mounted to the torque tube 37, and a second mounting flange or lug 34c that is rigidly mounted to the torque tube 38, to the fuselage, i. e. the fuselage frames 40. The mounting lugs 34a, 34c are preferably integrated into a leg box 31 of the support leg 30, which e. g. implements one of the leg boxes 11a, 11b of Figure 1.

More specifically, the mounting lugs 34a, 34c are preferably formed as longitudinal end flanges of associated longitudinal frames or spars 31b, 31a of the leg box 31. Illustratively, the longitudinal frames 31a, 31b delimit the leg box 31 laterally and form together with upper and lower skins 32a, 32b which extend between the longitudinal frames 31a, 31b a box-shaped structure 32. Close to the longitudinal frame 31a a leading-edge fairing 33a may be mounted to the leg box 31 and close to the longitudinal frame 31b a trailing-edge fairing 33b may be mounted to the leg box 31 such that the latter is preferably aerodynamically shaped. However, instead of providing the leg box 31 with the fairings 33a, 33b, the leg box 31 as such may be formed with an aerodynamic shape.

Illustratively, the leg box 31 further comprises a transversal frame 31d that interconnects the longitudinal frames 31a, 31b close to the mounting lugs 34c, 34a. The transversal frame 31d is preferably interrupted by another longitudinal frame 31c that forms an associated mounting flange or lug 34b and that is arranged between the longitudinal frames 31a, 31b. Alternatively, the mounting lug 34b may be an integral part of the transversal frame 31d.

In an illustrative mounting procedure for mounting the support leg 30 and, more particularly, the leg box 31 to the fuselage, i. e. the fuselage frames 40, initially the end flange 37a of the torque tube 37 is rigidly mounted in a torque proof manner to the mounting plate 41a of the web 41, e. g. by means of a plurality of fasteners (51 in Figure 5) and the end flange 38b of the torque tube 38 is rigidly mounted in a torque proof manner to the mounting plate 42a of the web 42, e. g. by means of a plurality of fasteners (53 in Figure 5). Then, the leg box 31 is positioned such that the mounting lug 34b is arranged between the end flange 37b of the torque tube 37 and the end flange 38a of the torque tube 38, the mounting lug 34a is arranged adjacent the mounting plate 41a, and the mounting lug 34c is arranged adjacent the mounting plate 42a. Thus, the shear pin 35a may be inserted through the mounting lug 34c, the mounting plate 42a, the torque tube 38, the mounting lug 34b, the torque tube 37, the mounting plate 41a, and the mounting lug 34a. Finally, the shear pin 35a may be fixed in this position by means of associated fasteners, e. g. suitable washer/nut combinations 43a, 43b, and the end flange 37b of the torque tube 37 as well as the end flange 38a of the torque tube 38 are rigidly mounted in a torque proof manner to the mounting lug 34b of the leg box 31, e. g. by means of a plurality of fasteners (52 in Figure 5).

Figure 4 shows the support leg 30 of Figure 3 that illustratively realizes the support leg 10a of the landing gear 10 of Figure 1 with the support rod 12a and the solid base 13a, and that is mounted pivotally to the fuselage 2 of Figure 1 in the lower fuselage region 2c at the portside shell 2f. More specifically, the support leg 30 comprises the leg box 31 of Figure 3, from which only the mounting lug 34c is visible, which is pivotally supported at the mounting plate 42a of the web 42 of the fuselage 2 by means of the pivot bearing arrangement 35.

Figure 5 shows the support leg 30 of Figure 3 that illustratively realizes the support leg 10a of Figure 1, and that is mounted pivotally to the fuselage 2 of Figure 1 and, more particularly, to the mounting plates 41a, 42a of the webs 41, 42 of Figure 3. As described above at Figure 3, the end flange 37a of the torque tube 37 is rigidly mounted in a torque proof manner to the mounting plate 41a of the web 41 by means of a plurality of fasteners 51, the end flange 38b of the torque tube 38 is rigidly mounted in a torque proof manner to the mounting plate 42a of the web 42 by means of a plurality of fasteners 53, and the end flange 37b of the torque tube 37 as well as the end flange 38a of the torque tube 38 are rigidly mounted in a torque proof manner to the mounting lug 34b of the leg box 31 by means of a plurality of fasteners 52. Furthermore, the shear pin 35a is inserted through the mounting lug 34c, the mounting plate 42a, the torque tube 38, the mounting lug 34b, the torque tube 37, the mounting plate 41a, as well as the mounting lug 34a, and hold in position by means of the washer/nut combinations 43a, 43b.

Preferably, the shear pin 35a enables rotation of the support leg 30 about the shear pin 35a, i. e. about a respective rotation axis 44 that corresponds illustratively to the length direction 39 of the torque tubes 37, 38. However, the support leg 30 is connected via the torque tubes 37, 38 to the fuselage 2 such that the torque tubes 37, 38 allow rotation of the support leg 30 about the rotation axis 44, as illustrated with an arrow 45, in their associated predetermined elastic range by acting as torsional springs, i. e. by means of elastic deformation. Nevertheless, outside of the predetermined elastic range the torque tubes 37, 38 act as energy absorbers, i. e. by means of plastic deformation.

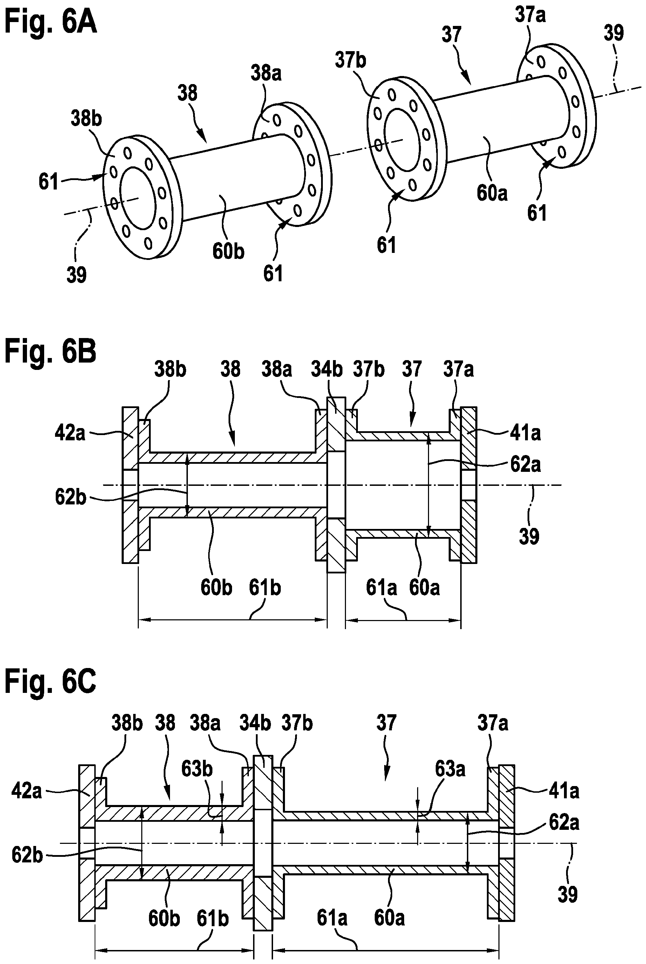

Figure 6A shows the torque tubes 37, 38 with the end flanges 37a, 37b, 38a, 38b of Figure 3 and Figure 5. By way of example, the torque tubes 37, 38 have identical tube walls 60a, 60b and respectively comprise a plurality of circular holes 61 provided in each one of the end flanges 37a, 37b, 38a, 38b to enable mounting of the torque tubes 37, 38 as described above.

By way of example, the torque tubes 37, 38 are formed identically, at least within predetermined manufacturing tolerances. However, the torque tubes 37, 38 may also be provided with differing shapes, as described hereinafter.

Figure 6B shows the torque tubes 37, 38 with the end flanges 37a, 37b, 38a, 38b and the tube walls 60a, 60b of Figure 6A according to a first variant. Furthermore, the mounting plates 41a, 42a, and the mounting lug 34b of Figure 3 and Figure 5 are shown.

According to the first variant, the torque tubes 37, 38 may have different tube lengths 61a, 61b. Alternatively, or in addition, they may have different tube diameters 62a, 62b.

Figure 6C shows the torque tubes 37, 38 with the end flanges 37a, 37b, 38a, 38b and the tube walls 60a, 60b of Figure 6A according to a second variant. Furthermore, the mounting plates 41a, 42a, and the mounting lug 34b of Figure 3 and Figure 5 are shown.

According to the second variant, the torque tubes 37, 38 may still have different tube lengths 61a, 61b and/or different tube diameters 62a, 62b. However, alternatively, or in addition, they may have different tube wall thicknesses 63a, 63b.

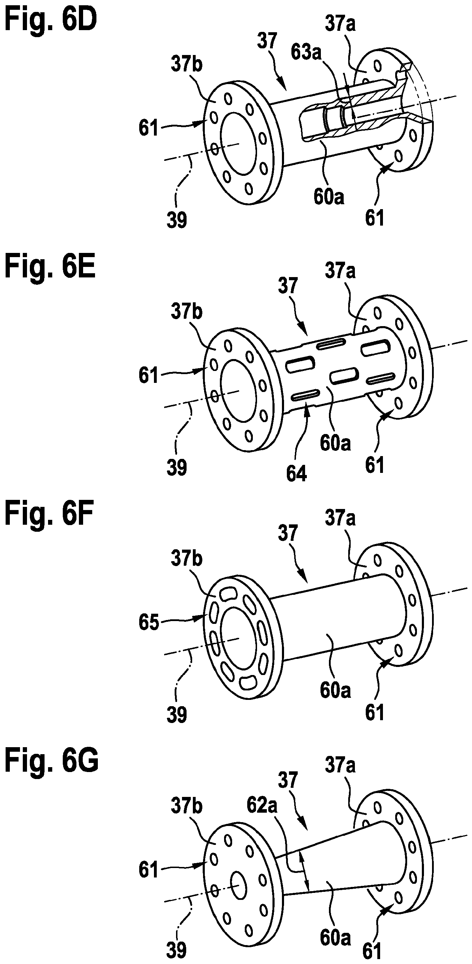

Figure 6D shows a third variant of the torque tube 37 with the end flanges 37a, 37b, the tube wall 60a with the wall thickness 63a, and the plurality of circular holes 61 provided in each one of the end flanges 37a, 37b according to Figure 6A. According to this third variant, the wall thickness 63a may vary in the length direction 39 of the torque tube 37.

It should be noted that the torque tube 38 of Figure 6A may be embodied similar to the torque tube 37. Therefore, the torque tube 37 is described in Figure 6D, as well as in Figure 6E to Figure 6G, representative for both torque tubes 37, 38, for simplicity and brevity.

Figure 6E shows a fourth variant of the torque tube 37 with the end flanges 37a, 37b, the tube wall 60a, and the plurality of circular holes 61 provided in each one of the end flanges 37a, 37b according to Figure 6A. According to this fourth variant, the tube wall 60a is provided with a plurality of slots 64 in the length direction 39 of the torque tube 37.

Figure 6F shows a fifth variant of the torque tube 37 with the end flanges 37a, 37b, the tube wall 60a, and the plurality of circular holes 61 provided in the end flange 37a according to Figure 6A. According to this fifth variant, the end flange 37b is provided with a plurality of elongated holes 65 in peripheral direction.

Figure 6G shows a sixth variant of the torque tube 37 with the end flanges 37a, 37b, the tube wall 60a, and the plurality of circular holes 61 provided in each one of the end flanges 37a, 37b according to Figure 6A. According to this sixth variant, the tube diameter 62a according to Figure 6B of the torque tube 37 varies.

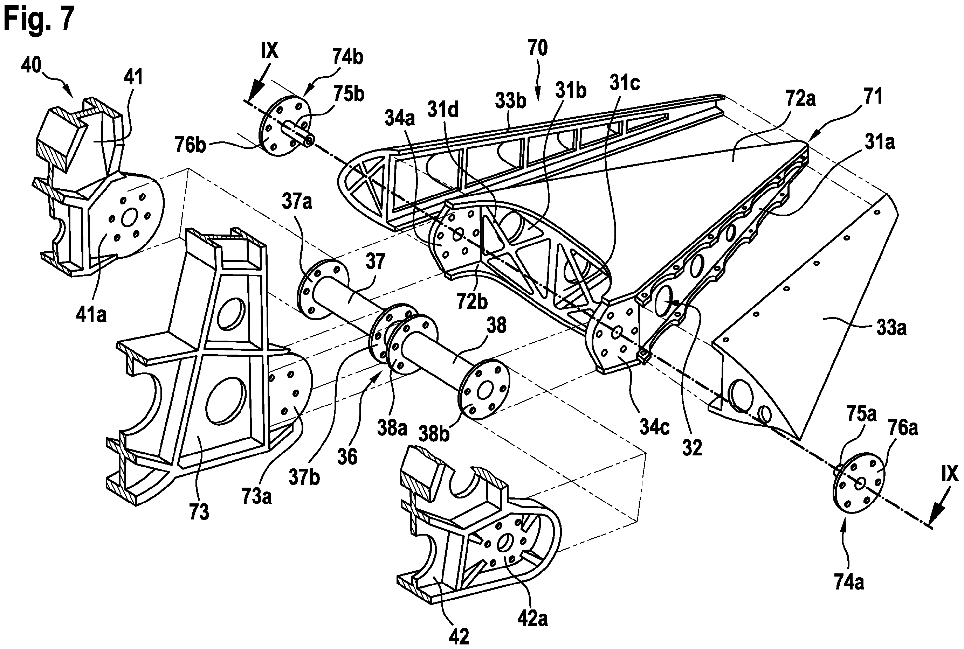

Figure 7 shows an illustrative support leg 70 according to a first variant, which may be mounted pivotally to the fuselage frames 40 of Figure 3 with the webs 41, 42, which now illustratively comprise an additional web 73 with an associated mounting plate 73a. Similar to the support leg 30 of Figure 3, the support leg 70 may be used to realize one or more of the individual support legs 10a, 10b of Figure 1.

The support leg 70 is embodied similar to the support leg 30 of Figure 3. Therefore, only distinguishing components of the support leg 70 with respect to the support leg 30 of Figure 3 are described in more detail hereinafter, for brevity and conciseness.

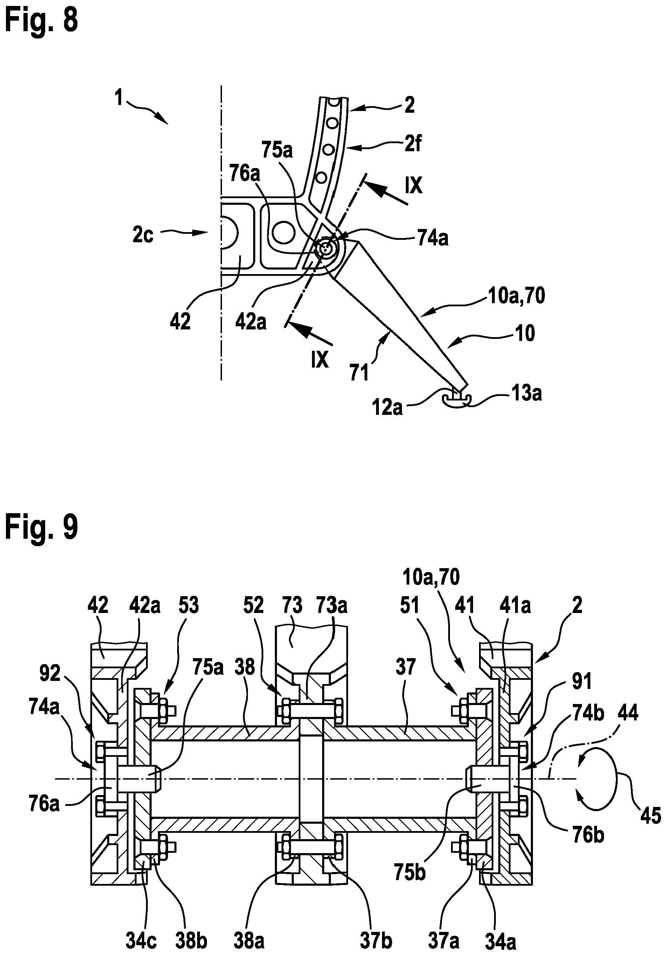

The support leg 70 is preferably adapted for being mounted pivotally to the fuselage, i. e. the fuselage frames 40, by means of two individual pivot bearing units 74a, 74b. The pivot bearing units 74a, 74b are illustratively provided to enable rotation of the support leg 70 about an associated rotation axis (44 in Figure 9) defined by the pivot bearing units 74a, 74b and to transfer shear forces from the support leg 70 to the fuselage, i. e. the fuselage frames 40.

By way of example, each one of the pivot bearing units 74a, 74b comprises a shear pin 75a, 75b that is illustratively integrated into an associated shear pin attachment 76a, 76b and provided to transfer shear forces from the support leg 70 to the fuselage, i. e. the fuselage frames 40. Preferably, the shear pin 75b is adapted for pivotally mounting the mounting flange or lug 34a that is rigidly mounted to the torque tube 37 to the fuselage, i. e. the fuselage frames 40, and the shear pin 75a is adapted for pivotally mounting the mounting flange or lug 34c that is rigidly mounted to the torque tube 38, to the fuselage, i. e. the fuselage frames 40.

In contrast to Figure 3, only the mounting lugs 34a, 34c are integrated into a leg box 71 of the support leg 70 and illustratively formed as longitudinal end flanges of the longitudinal frames or spars 31b, 31a of the leg box 71, while the mounting flange or lug 34b is omitted. Illustratively, the longitudinal frames 31a, 31b delimit the leg box 71 laterally and form together with upper and lower skins 72a, 72b which extend between the longitudinal frames 31a, 31b the box-shaped structure 32.

In an illustrative mounting procedure for mounting the support leg 70 and, more particularly, the leg box 71 to the fuselage, i. e. the fuselage frames 40, initially the end flange 37a of the torque tube 37 is rigidly mounted in a torque proof manner to the mounting lug 34a of the leg box 71, e. g. by means of a plurality of fasteners (51 in Figure 9) and the end flange 38b of the torque tube 38 is rigidly mounted in a torque proof manner to the mounting lug 34c of the leg box 71, e. g. by means of a plurality of fasteners (53 in Figure 9). Then, the leg box 71 is positioned such that the mounting plate 73a of the web 73 is arranged between the end flange 37b of the torque tube 37 and the end flange 38a of the torque tube 38, the mounting lug 34a is arranged adjacent the mounting plate 41a, and the mounting lug 34c is arranged adjacent the mounting plate 42a. Thus, the shear pin 75a of the pivot bearing unit 74a may be inserted through the mounting plate 42a into the mounting lug 34c, and the shear pin 75b of the pivot bearing unit 74b may be inserted through the mounting plate 41a into the mounting lug 34a. Then, the shear pin attachments 76a, 76b of the pivot bearing units 74a, 74b are fixed in their respective positions by means of associated fasteners (91, 92 in Figure 9), e. g. suitable bolts or screws, and the end flange 37b of the torque tube 37 as well as the end flange 38a of the torque tube 38 are rigidly mounted in a torque proof manner to the mounting plate 73a of the web 73, e. g. by means of a plurality of fasteners (52 in Figure 9).

Figure 8 shows the support leg 70 of Figure 7 that illustratively realizes the support leg 10a of the landing gear 10 of Figure 1 with the support rod 12a and the solid base 13a, and that is mounted pivotally to the fuselage 2 of Figure 1 in the lower fuselage region 2c at the portside shell 2f. More specifically, the support leg 70 comprises the leg box 71 of Figure 7, which is pivotally supported at the mounting plate 42a of the web 42 of the fuselage 2 by means of the pivot bearing unit 74a.

Figure 9 shows the support leg 70 of Figure 7 that illustratively realizes the support leg 10a of Figure 1, and that is mounted pivotally to the fuselage 2 of Figure 1 and, more particularly, to the mounting plates 41a, 42a, 73a of the webs 41, 42, 73 of Figure 7. As described above at Figure 7, the end flange 37a of the torque tube 37 is rigidly mounted in a torque proof manner to the mounting lug 34a of the leg box 71 by means of the plurality of fasteners 51, the end flange 38b of the torque tube 38 is rigidly mounted in a torque proof manner to the mounting lug 34c of the leg box 71 by means of the plurality of fasteners 53, and the end flange 37b of the torque tube 37 as well as the end flange 38a of the torque tube 38 are rigidly mounted in a torque proof manner to the mounting plate 73a of the leg box 71 by means of the plurality of fasteners 52. Furthermore, the shear pin 75a is inserted through the mounting plate 42a into the mounting lug 34c, and the shear pin 75b is inserted through the mounting plate 41a into the mounting lug 34a. Moreover, the shear pin attachments 76a, 76b of the pivot bearing units 74a, 74b are fixed in their respective positions at the mounting plates 42a, 41a by means of the fasteners 91, 92.

Preferably, the shear pins 75a, 75b enable rotation of the support leg 70 about the shear pins 75a, 75b, i. e. about the rotation axis 44. However, the support leg 70 is connected via the torque tubes 37, 38 to the fuselage 2 such that the torque tubes 37, 38 allow rotation of the support leg 70 about the rotation axis 44, as illustrated with the arrow 45, in their associated predetermined elastic range by acting as torsional springs, i. e. by means of elastic deformation. Nevertheless, outside of the predetermined elastic range the torque tubes 37, 38 act as energy absorbers, i. e. by means of plastic deformation.

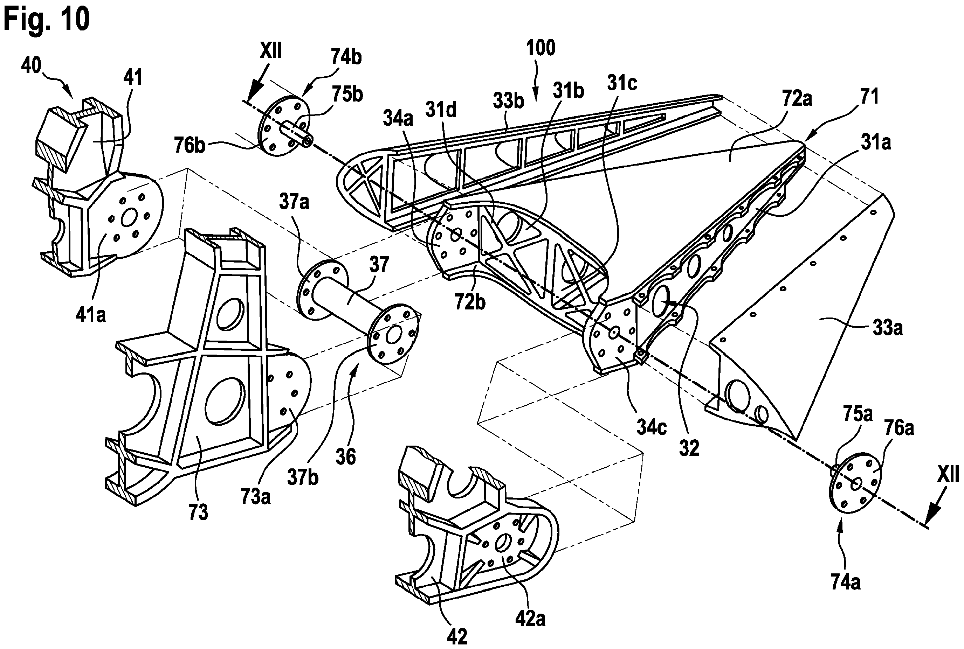

Figure 10 shows an illustrative support leg 100 according to a second variant, which may be mounted pivotally to the fuselage frames 40 of Figure 7 with the webs 41, 42, 73. Similar to the support leg 70 of Figure 7, the support leg 100 may be used to realize one or more of the individual support legs 10a, 10b of Figure 1.

The support leg 100 is embodied similar to the support leg 70 of Figure 7 with the leg box 71. However, in contrast to Figure 7 only the torque tube 37 is used with the support leg 100 and the torque tube 38 of Figure 7 is omitted.

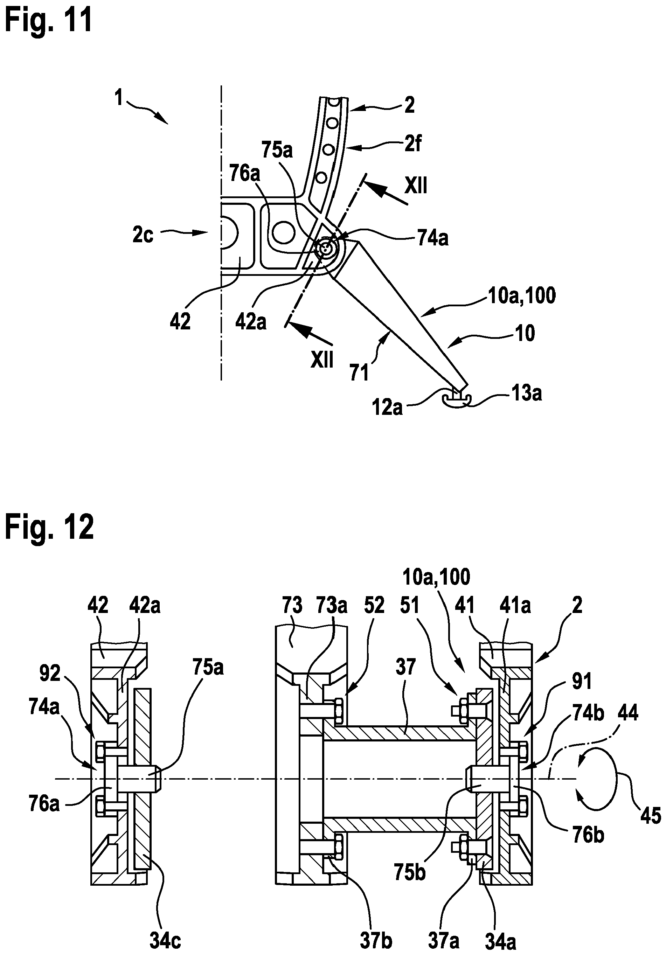

In an illustrative mounting procedure for mounting the support leg 100 and, more particularly, the leg box 71 to the fuselage, i. e. the fuselage frames 40, initially the end flange 37a of the torque tube 37 is rigidly mounted in a torque proof manner to the mounting lug 34a of the leg box 71, e. g. by means of a plurality of fasteners (51 in Figure 12). Then, the leg box 71 is positioned such that the mounting plate 73a of the web 73 is arranged adjacent the end flange 37b of the torque tube 37, the mounting lug 34a is arranged adjacent the mounting plate 41a, and the mounting lug 34c is arranged adjacent the mounting plate 42a. Thus, the shear pin 75a of the pivot bearing unit 74a may be inserted through the mounting plate 42a into the mounting lug 34c, and the shear pin 75b of the pivot bearing unit 74b may be inserted through the mounting plate 41a into the mounting lug 34a. Then, the shear pin attachments 76a, 76b of the pivot bearing units 74a, 74b are fixed in their respective positions by means of associated fasteners (91, 92 in Figure 12), e. g. suitable bolts or screws, and the end flange 37b of the torque tube 37 is rigidly mounted in a torque proof manner to the mounting plate 73a of the web 73, e. g. by means of a plurality of fasteners (52 in Figure 12).

Figure 11 shows the support leg 100 of Figure 10 that illustratively realizes the support leg 10a of the landing gear 10 of Figure 1 with the support rod 12a and the solid base 13a, and that is mounted pivotally to the fuselage 2 of Figure 1 in the lower fuselage region 2c at the portside shell 2f. More specifically, the support leg 100 comprises the leg box 71 of Figure 10, which is pivotally supported at the mounting plate 42a of the web 42 of the fuselage 2 by means of the pivot bearing unit 74a.

Figure 12 shows the support leg 100 of Figure 10 that illustratively realizes the support leg 10a of Figure 1, and that is mounted pivotally to the fuselage 2 of Figure 1 and, more particularly, to the mounting plates 41a, 42a, 73a of the webs 41, 42, 73 of Figure 10. As described above at Figure 10, the end flange 37a of the torque tube 37 is rigidly mounted in a torque proof manner to the mounting lug 34a of the leg box 71 by means of the plurality of fasteners 51, and the end flange 37b of the torque tube 37 is rigidly mounted in a torque proof manner to the mounting plate 73a of the leg box 71 by means of the plurality of fasteners 52. Furthermore, the shear pin 75a is inserted through the mounting plate 42a into the mounting lug 34c, and the shear pin 75b is inserted through the mounting plate 41a into the mounting lug 34a. Moreover, the shear pin attachments 76a, 76b of the pivot bearing units 74a, 74b are fixed in their respective positions at the mounting plates 42a, 41a by means of the fasteners 91, 92.

Preferably, the shear pins 75a, 75b enable rotation of the support leg 100 about the shear pins 75a, 75b, i. e. about the rotation axis 44. However, the support leg 100 is connected via the torque tube 37 to the fuselage 2 such that the torque tube 37 allows rotation of the support leg 100 about the rotation axis 44, as illustrated with the arrow 45, in its associated predetermined elastic range by acting as a torsional spring, i. e. by means of elastic deformation. Nevertheless, outside of the predetermined elastic range the torque tube 37 acts as an energy absorber, i. e. by means of plastic deformation.

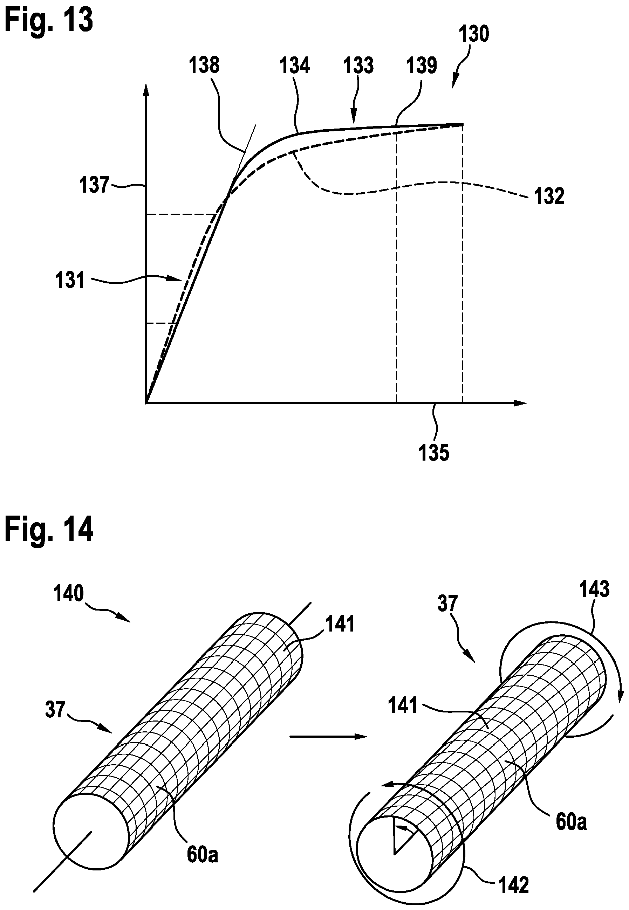

Figure 13 shows a force deflection diagram 130 with a stroke axis 135 and a force axis 137, as well as two illustrative force deflection curves 132, 134. More specifically, the force deflection curves 132, 134 indicate, for two different landing gears, forces acting on the landing gears in response to strokes on the landing gears. By way of example, the force deflection curve 132 is associated with a conventional skid-type landing gear and the force deflection curve 134 is associated with the at least partially non-retractable landing gear 10 of the rotary wing aircraft 1 of Figure 1.

More generally, the main task of a landing gear of a rotary wing aircraft is to take, store, and/or dissipate respective kinetic energy of the rotary wing aircraft during landing. In general, the best practice to do so is a non-linear working curve, i. e. force deflection curve of a given landing gear assembly. This force deflection curve is usually created by various means, e. g. with a hydro/pneumatic strut (Oleo Damper) or due to plasticization of materials (for conventional skid-type landing gears).

Preferably, the force deflection curve is at least approximately bi-linear. Such a bi-linear behavior limits occurring forces and loads to an acceptable level, which is beneficial for a respective static sizing of the rotary wing aircraft's fuselage, and makes use of the stroke below the fuselage which is usually sufficiently available due to a comparatively big ground clearance below the fuselage. According to the present invention, this is achieved by using a material with high plasticization capabilities, such as e. g. aluminum, for realization of the at least one torsion element, i. e. the torque tube(s). After reaching yield strength in a hard or downward crash landing, the material is locally in the state of plastic deformation. As described above with reference to Figure 3 to Figure 12, this may be achieved by using a simple metallic torque tube, which may be split into two torque tubes, e. g. for manufacturing reasons. As a result, this will lead to the desired flattened resp. locally more linearized force deflection curve 134.

More particularly, the force deflection curve 134 is illustratively composed of two essentially linear parts, i. e. linear approximations 138, 139. The linear approximation 138 illustrates an elastic domain 131 of the at least one torsion element of the at least partially non-retractable landing gear 10 of the rotary wing aircraft 1 of Figure 1, and the linear approximation 139 illustrates a plastic domain of the at least one torsion element of the at least partially non-retractable landing gear 10 of the rotary wing aircraft 1 of Figure 1. The exact shape of the force deflection curve 134 in the elastic/plastic domains 131, 133 is characterized by the choice of the alloy and by its geometrical shape. Illustrative suitable geometrical shapes are shown, by way of example, in Figure 6A to Figure 6G.

Figure 14 shows an illustrative deformation mechanics diagram 140. By way of example, the deformation mechanics diagram 140 is illustrated for the torque tube 37 of Figure 3 to Figure 12, which is shown without the end flanges 37a, 37b, for simplicity. More specifically, the torque tube 37 is shown with gridlines 141 to illustrate deformation of the torque tube 37 upon twisting of the torque tube 37 by means of oppositely applied torques 142, 143.

It should be noted that modifications to the above described embodiments are within the common knowledge of the person skilled in the art and, thus, also considered as being part of the present invention. More particularly, the at least partially non-retractable landing gear 10 of the rotary wing aircraft 1 of Figure 1 described above is mainly characterized in that the load reaction respectively load path for normal loads and for bending loads is separated such that an underlying design may be adapted easily to individual loading conditions. These loading conditions may, in turn, be influenced by the design itself as respective individual components of the load with their corresponding equilibration of forces and moments are acting in perpendicular planes which have a minor interaction to each other. In consequence, the respective individual load components may easily be separated for sizing and material selection and, thus, for optimization.

Moreover, a dedicated "weak point" may be predefined in the overall structure of the landing gear at the location of the torque tube(s). This location triggers the global behavior of the landing gear and may be taken as reference point for the design of the landing gear: all loads exceeding a certain level may be cut-off if exceeding a predetermined threshold value.

During normal operation, preferably the entire, at least partially non-retractable landing gear according to the present invention acts in its elastic regime, but as during operation local short-time overload may take place, the torque tube(s) takes these overload forces and dissipates small fractions of energy by plasticization. Accordingly, during normal operation the plasticization of the torque tube(s) may be used as an indicator and measurement device for the loads which occurred during operation. As all other parts are preferably still operating in their elastic range when the torque tube(s) already operates in its plastic range, only the torque tube(s) has to be exchanged from time to time.

The shown innovative arrangement is further beneficial, in that, should a hard or downward crash landing within the design envelope occur, the deformed element, i. e. the torque tube(s) is of simple and easily exchangeable nature and, thus, may be exchanged quickly. Further benefit is achieved as the torque tube(s), by magnitude of its deformation, provides a clear indication of forces having acted on the inventive landing gear and, thus, allows simple classification of incident severity and associated required return-to-service actions.

In addition, the inventive landing gear provides a solution to provide multiple landing gear configurations (wheeled, skid, etc.) on a common airframe structure without requiring significant structural changes in manufacturing (cost) or inclusions of structural provisions (weight) for multiple configurations.

### Reference List

1 rotary wing aircraft
2 fuselage
2a cabin
2b cockpit
2c lower fuselage region
2d upper fuselage region
2e underside shell
2f portside shell
2g starboard side shell
3 tail boom
4 lateral quarter shells
10 non-retractable landing gear
10a, 10b individual support legs
11a, 11b aerodynamically shaped leg boxes
12a, 12b support rods
13a, 13b solid bases
14a snow shoe
15a wheel
16a skid
30 support leg
31 aerodynamically shaped leg box
31a, 31b, 31c longitudinal frames
31d transversal frame
32 box-shaped structure
32a, 32b upper and lower skins
33a leading-edge fairing
33b trailing-edge fairing
34a, 34b, 34c mounting lugs
35 pivot bearing arrangement
35a shear pin
36 torsion element
37 torque tube
37a, 37b end flanges
38 torque tube
38a, 38b end flanges
39 torque tube length direction
40 fuselage frames
41, 42 individual webs
41a, 42a frame mounting plates
43a, 43b washer/nut combinations
44 rotation axis
45 support leg rotation
51, 52, 53 pluralities of fasteners
60a, 60b tube walls
61 plurality of circular holes
61a, 61b tube lengths
62a, 62b tube diameters
63a, 63b tube wall thicknesses
64 plurality of slots
65 plurality of elongated holes
70 support leg
71 aerodynamically shaped leg box
72a, 72b upper and lower skins
73 individual web
73a frame mounting plate
74a, 74b pivot bearing units
75a, 75b shear pins
76a, 76b shear pin attachments
91, 92 pluralities of screws
100 support leg
130 force deflection diagram
131 elastic domain
132, 134 force deflection curves
133 plastic domain
135 stroke axis
137 force axis
138, 139 linear approximations
140 deformation mechanics diagram
141 gridlines
142, 143 applied torque

## Claims

1. A rotary wing aircraft (1) with a fuselage (2) and an at least partially non-retractable landing gear (10), wherein the at least partially non-retractable landing gear (10) comprises at least three individual support legs (10a, 10b), wherein at least one individual support leg (30) of the at least three individual support legs (10a, 10b) is mounted pivotally to the fuselage (2) by means of an associated pivot bearing arrangement (35), wherein the at least one individual support leg (30) is further connected to the fuselage (2) via at least one torsion element (36) with a predetermined elastic range, and wherein the at least one torsion element (36) is adapted to act, in the predetermined elastic range, as a torsional spring, and, outside of the predetermined elastic range, as an energy absorber.

2. The rotary wing aircraft (1) of claim 1,
wherein the associated pivot bearing arrangement (35) is provided to enable rotation of the at least one individual support leg (30) about an associated rotation axis (44) defined by the associated pivot bearing arrangement (35) and to transfer shear forces from the at least one individual support leg (30) to the fuselage (2), and wherein the at least one torsion element (36) is embodied with an inherent nonlinear force characteristic.

3. The rotary wing aircraft (1) of claim 1 or 2,
wherein the associated pivot bearing arrangement (35) comprises at least one shear pin (35a) which is provided to transfer shear forces from the at least one individual support leg (30) to the fuselage (2), and wherein the at least one torsion element (36) rigidly attaches the at least one individual support leg (30) to the fuselage (2) to limit at least in the predetermined elastic range of the at least one torsion element (36) rotation of the at least one individual support leg (30) about the rotation axis (44) defined by the at least one shear pin (35a).

4. The rotary wing aircraft (1) of claim 3,
wherein the at least one torsion element (36) comprises at least one torque tube (37) that rigidly attaches the at least one individual support leg (30) to the fuselage (2) to limit at least in the predetermined elastic range of the at least one torsion element (36) rotation of the at least one individual support leg (30) about the associated pivot bearing arrangement (35), and wherein the at least one torque tube (37, 38) comprises in its length direction (39) at least one of a circular cross section, an elliptic cross section, a polygonal cross section, a constant outer diameter, a varying outer diameter, a constant wall thickness, a varying wall thickness, one or more holes, one or more slots, one or more grooves, one or more rims, one or more weak points, or one or more steps.

5. The rotary wing aircraft (1) of claim 4,
wherein the at least one torque tube (37) is provided in its length direction (39) with end flanges (37a, 37b), wherein each end flange (37a, 37b) comprises in the length direction (39) of the at least one torque tube (37) at least one of a circular cross section, an elliptic cross section, a polygonal cross section, a plurality of circular holes, a plurality of polygonal holes, or a plurality of slots.

6. The rotary wing aircraft (1) of any one of claims 3 to 5,
wherein the at least one individual support leg (30) comprises at least a first mounting flange (34a) and a second mounting flange (34c), and wherein the first mounting flange (34a) and the second mounting flange (34c) are pivotally mounted to the fuselage (2) by means of the at least one shear pin (35a).

7. The rotary wing aircraft (1) of claim 3 and 6,
wherein the at least one shear pin (75a, 75b) comprises a first shear pin (75b) for pivotally mounting the first mounting flange (34a) to the fuselage (2), and a second shear pin (75a) for pivotally mounting the second mounting flange (34c) to the fuselage (2).

8. The rotary wing aircraft (1) of claim 7,
wherein the first shear pin (75b) and the second shear pin (75a) are rigidly mounted to the fuselage (2).

9. The rotary wing aircraft (1) of claim 3 with any one of claims 6 to 8,
wherein the at least one torque tube (37) is rigidly mounted to the first mounting flange (34a) and to the fuselage (2).

10. The rotary wing aircraft (1) of claim 9,
wherein the at least one torsion element (36) comprises an additional torque tube (38) that rigidly attaches the at least one individual support leg (70) to the fuselage (2) to limit at least in the predetermined elastic range of the at least one torsion element (36) rotation of the at least one individual support leg (70) about the associated rotation axis (44) defined by the at least one shear pin (75a, 75b), wherein the additional torque tube (38) is rigidly mounted to the second mounting flange (34c) and to the fuselage (2).

11. The rotary wing aircraft (1) of claim 3 and 6,
wherein the at least one individual support leg (30) comprises a third mounting flange (34b) that is arranged along the associated rotation axis (44) of the at least one individual support leg (30) between the first mounting flange (34a) and the second mounting flange (34c), and wherein the at least one torque tube (37) is rigidly mounted to the third mounting flange (34b) and to the fuselage (2) close to the first mounting flange (34a).

12. The rotary wing aircraft (1) of claim 11,
wherein the at least one torsion element (36) comprises an additional torque tube (38) that rigidly attaches the at least one individual support leg (30) to the fuselage (2) to limit at least in the predetermined elastic range of the at least one torsion element (36) rotation of the at least one individual support leg (30) about the associated rotation axis (44) defined by the at least one shear pin (35a), wherein the additional torque tube (38) is rigidly mounted to the third mounting flange (34b) and to the fuselage (2) close to the second mounting flange (34c).

13. The rotary wing aircraft (1) of claim 11 or 12,
wherein the at least one shear pin (35a) connects the first mounting flange (34a) to the second mounting flange (34c).

14. The rotary wing aircraft (1) of claim 10 or 12,
wherein the additional torque tube (38) comprises in its length direction (39) at least one of a circular cross section, an elliptic cross section, a polygonal cross section, a constant outer diameter, a varying outer diameter, a constant wall thickness, a varying wall thickness, one or more holes, one or more grooves, one or more rims, one or more weak points, or one or more steps.

15. The rotary wing aircraft (1) of claim 14,
wherein the additional torque tube (38) is provided in its length direction (39) with end flanges (38a, 38b), wherein each end flange (38a, 38b) comprises in the length direction (39) of the additional torque tube (38) at least one of a circular cross section, an elliptic cross section, a polygonal cross section, a plurality of circular holes, a plurality of polygonal holes, or a plurality of slots.
